# EUROPEAN PATENT APPLICATION

(11) **EP 4 654 045 A1**
(43) Date of publication of application: **26.11.2025**
(21) Application number: 24177124.5
(22) Date of filing: 21.05.2024
(51) Int. Cl.: G06F 16/906, G06N 3/00

(54) **DEVICE AND METHOD FOR TRAINING A ONE-CLASS INVERTIBLE NEURAL NETWORK**

(71) Applicant: Robert Bosch GmbH, 70442 Stuttgart (DE)
(72) Inventor: Schmier, Robert, 69115 Heidelberg (DE); Straehle, Christoph-Nikolas, 71263 Weil Der Stadt (DE)

(57) **Abstract**

Computer-implemented method for training a neural network (60), wherein the neural network (60) is an invertible neural network configured for accepting a sensor signal as input, wherein the method comprises the steps of:
• Obtaining a first sensor signal (*xᵢ*) from a dataset (T);
• Sampling a value (*z̃ᵢ*) from a latent space (s) of the neural network (60), wherein the value (*z̃ᵢ*) is sampled from a predefined hypervolume (h) in the latent space (s);
• Determining a second sensor signal (*x̃ᵢ*) from the sampled value (*z̃ᵢ*) by inversely mapping the sampled value (*z̃ᵢ*) through the neural network (60);
• Determining a first latent representation (*z*₁) by forward mapping the first sensor (*xᵢ*) signal through the neural network (60);
• Determining a second latent representation (*z*₂) by forward mapping the second sensor signal (*x̃ᵢ*) through the neural network (60);
• Determining a loss value (*l*) from a loss function ( 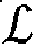 ), wherein the loss function ( 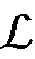 ) comprises a first term that characterizes a difference of the first latent representation (*z*₁) to a center (c) of the hypervolume (h) and wherein the loss function ( 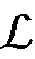 ) further comprises a second term that characterizes a negative difference of the second latent representation (*z*₂) to the center (c) of the hypervolume (h);
• Training the neural network (60) based on a negative gradient of the loss value (*l*).

## Description

### Technical field

The present invention concerns a computer-implemented method for training a neural network, a computer-implemented method for determining, whether a supplied sensor signal is anomalous or not, a training system, a control system, a computer program, and a machine-readable storage medium.

### Prior art

EP 3 975 011 discloses a computer-implemented method for training a self-normalizing flow.

Teshima et al. "Coupling-based Invertible Neural Networks are Universal Diffeomorphism Approximators", 2020, https://arxiv.org/pdf/2006.11469 discloses that a CF-INN is universal if its layers contain affine coupling and invertible linear functions as special cases.

### Technical background

Many modern systems rely on perceiving their environment or their own functionality through suitable sensors. The received sensor signals are often-times processed by statistical methods to extract useful information. Especially machine learning systems are frequently employed for processing sensor signals, e.g., for classifying the content of such sensor signal or for performing a regression analysis based on the sensor signals. The results of the machine learning systems are typically a vital building block for automated systems. For example, in robotics, the perceived environment serves as detected through a machine learning system may serve as proxy for planning actions in the real world. Likewise, the operation of a machine may depend on a self-perception of the machine. For example, an automated device may receive sensor signals about its own temperature, pressure, certain speeds of the device or elements of the device (e.g., wheels or bearings), noises originating from the device or vibrations originating from the device. The operation of the device may then be dependent on a classification of the received sensor signals, e.g., if the sensor signals characterize a normal operation.

Whether perceiving an environment or performing self-assessment as described above, it is paramount for sensor signals processed by automated devices to be analyzed with respect to whether a respective sensor signal represents an outlier, i.e., a sensor measurement that is not typically measured during operation of the sensor. Such signals may hint at failures of the sensing system as well as sensor signals, for which a machine learning system processing the sensor signals has not been trained during its training phase. Typically, such sensor signals lead to an unpredictable and/or diminishing performance of the respective machine learning system.

Advantageously, the method for training presented here allows for training a neural network to reliably detect whether a supplied sensor signal characterizes an outlier with respect to a known dataset of outliers. The method for training advantageously results in a neural network that is configured for anomaly detection. This neural network may then be used in any of the above-described cases in order to detect anomalies during inference time allowing for suitable measures to be taken in case an anomaly is detected (e.g., hailing a human operator).

### isclosure of the invention

In a first aspect, the invention concerns a computer-implemented method for training a neural network, wherein the neural network is an invertible neural network configured for accepting a sensor signal as input, wherein the method comprises the steps of:
- Obtaining a first sensor signal from a training dataset;
- Sampling a value from a latent space of the neural network, wherein the value is sampled from a predefined hypervolume in the latent space;
- Determining a second sensor signal from the sampled value by inversely mapping the sampled value through the neural network;
- Determining a first latent representation by forward mapping the first sensor signal through the neural network;
- Determining a second latent representation by forward mapping the second sensor signal through the neural network;
- Determining a loss value from a loss function, wherein the loss function comprises a first term that characterizes a difference of the first latent representation to a center of the hypervolume and wherein the loss function further comprises a second term that characterizes a negative difference of the second latent representation to the center of the hypervolume;
- Training the neural network based on a negative gradient of the loss value.

By construction, the neural network is configured for anomaly detection after training as the training method can be understood to train the neural network for one-class classification: Latent representations of samples (i.e., sensor signals) from the dataset are pulled close to the center of the hypervolume while other samples (i.e., latent representations of sensor signals not in the dataset) are pushed outside of the hypervolume. This way, the neural network learns to map samples from the dataset into the hypervolume while other samples are mapped to the outside of the hypervolume.

This may also be understood as samples from the dataset constituting the one class from a one-class classification problem. This one-class is mapped into the hyper sphere or hyper cube and all other classes are mapped to the outside.

"Sampling a value" may preferably be achieved by obtaining a random sample from the hypervolume. However, deterministic sampling strategies are also possible (e.g., selecting certain landmark points in the hypervolume or selecting points from a previously defined list of points). The term "value" may especially be understood as a non-scalar representation of data, e.g., a vector, a matrix, or a tensor. The "value" may hence be understood as having a dimensionality of the latent space.

The latent space may be understood as the space of output of the neural network. In other words, the neural network produces outputs of a predefined mathematical structure, e.g., a vector, a matrix, or a tensor. This output "lives" in a certain space of dimensionality equal to the dimensionality of the output of the neural network.

Alternatively, the latent space may be understood as the output of an intermediate layer of the neural network (i.e., a hidden layer of the neural network). As the neural network is invertible, any intermediate representation is also invertible making such intermediate representations also suitable to be used in the method.

The term "invertible neural networks" is understood to comprise both neural networks that provide for an approximate bijective mapping (e.g., approximated normalizing flows such as self-normalizing flows) as well as neural networks that provide for an exact bijective mapping (e.g., normalizing flows, invertible residual networks).

In all embodiments of the method, the hypervolume may be of an arbitrary shape but preferably an at least weakly monotonic with respect to the center and compact distribution in the hyper space. Preferred embodiments of the hypervolume are a hypersphere, a hypercube, or a hyperrectangle.

The term "difference" may be understood as a distance or any other suitable measure of similarity, e.g., a cosine similarity.

In all embodiments of the method, the center may be a center of mass of the hypervolume, a geometric center, or any other point in the hypervolume that represents an origin of the hypervolume.

The term "negative difference" may be understood as multiplying an obtained distance or similarity with -1 in order to obtain a value indicating the distance or similarity in a negative direction.

"Training the neural network based on a negative gradient" may be understood as using the negative gradient in a gradient descent method for training the neural network. Common methods such as Adam or SGD may be used.

In all embodiments of the method, the term sensor signal may be understood as a digital measurement result of a sensor. The sensor may perceive an environment of a technical system and/or the technical system itself (e.g., certain physical properties of the technical system such as temperature, pressure, speed, acceleration, rotation, vibrations, power consumption, electrical current, amperage, or the like). The sensor may especially be an optical sensor with the sensor signal characterizing a measurement of the optical sensor, i.e., an image. The optical sensor may especially be a camera, a lidar, a radar, an ultrasonic sensor, or a thermal camera. The neural network using the sensor signal as input may especially be understood as the neural network operating on the low-level features of the sensor signal as input. For images, for example, the neural network may especially receive the pixel values as input and perform its computations based on these pixel values. For, e.g., audio data, the sensor signal may represent a spectrum of an audio signal or quantized samples of the audio signal. The neural network may hence operate on these values respectively.

The sensor signal may also be a time series of individual sensor readings from a predefined sensor. The sensor in this case may especially be a sensor for measuring as temperature, pressure, speed, acceleration, rotation, vibrations, power consumption, electrical current, amperage, or the like.

It is understood that the term "sensor signal" also covers representations of a raw sensor signal. For example, if a raw sensor signal is provided to a pre-processing function and the neural network is provided the pre-processed result of the sensor signal, this is still understood as "the neural network receiving the sensor signal as input".

Advantageously, the neural network is configured during training to be able to perform one-class classification. The one class is represented by sensor signals from the training dataset. During inference, sensor signals can advantageously be flagged as anomalous if they fall outside of the hypervolume and/or on the surface of the hyper volume.

Even more advantageously, the inventors found that the training method improves an anomaly detection performance of the neural network. In particular, the training method leads to an increased anomaly detection performance of a coupling-based invertible neural network evaluated on the CIFAR10 dataset compared to a standard coupling-based invertible neural network. The increased performance is especially present for the coupling-based invertible neural network as described by Teshima et al.

The center of hypervolume may preferably be located at the origin of the latent space.

Advantageously, this saves the method from performing computations as the respective differences computed in the method default to the first latent representation and second latent representation respectively. This leads to a reduction of necessary computational resources.

In preferred embodiments, the negative gradient is determined based on an automatic differentiation method and wherein the second sensor signal is further detached from the computational graph of the automatic differentiation method before being forward mapped through the neural network.

Advantageously, detaching the second sensor signal from the computational graph results in an even further increased performance as without detaching, the gradients of the sampled value that is to be pushed out of the hyper volume would cancel out in the training process and anomalous samples would remain in the hypervolume.

In preferred embodiments, the first term and/or the second term is a Euclidean distance or a cosine similarity or function expressing a maximum of a dimension-wise distance or a sum of the fourth powers of a dimension-wise distance.

The inventors found these measures of difference to lead to the biggest performance increase of the method.

In another aspect, the invention concerns a computer-implemented method for determining whether a provided sensor signal is normal or anomalous:
- Obtaining a neural network trained according to anyone of the preceding claims;
- Determining a latent representation of the sensor signal by forward mapping the sensor signal through the neural network;
- Determining the sensor signal as normal if a distance of the latent representation to the center according to claim 1 is equal to or below a predefined threshold and determine the sensor signal as anomalous otherwise.

This method can be understood as the inference method corresponding to the training method as presented above. The inference method inherits all its advantages from the training method.

Obtaining the neural network may be understood as performing the steps of the training method as part of the method for determining whether a provided sensor signal is normal or anomalous. Alternatively, it may also be understood as obtaining a neural network that has been trained with a training method as presented above, e.g., by downloading it from the internet or receiving it through online training platforms.

Preferably, the threshold in the inference method characterizes a border of the hypervolume of training method. In other words, the edge of the previously used hypervolume is used for deciding whether a provided sensor signal is normal (inside the hypervolume) or anomalous (outside the hypervolume). The edge itself may be considered normal or anomalous depending on a user's choice of (i.e., is a hyperparameter of the method).

In another aspect, the invention concerns a method for determining a control signal for a machine, wherein a sensor signal of a sensor observing an environment of the machine and/or the machine itself is provided to a method for determining whether the sensor signal is anomalous or not as presented above, wherein the control signal is determined according to the determination of the sensor signal as anomalous or normal.

Advantageously, this allows for increase in controllability of the machine as anomalous sensor signals responsible for a behavior of the machine are detect more reliably. This increases the safety of the machine.

Embodiments of the invention will be discussed with reference to the following figures in more detail. The figures show:
- Figure 1: a hyper volume in a latent space;
- Figure 2: the neural network during training;
- Figure 3: a training system for training the neural network;
- Figure 4: a control system using the neural network;

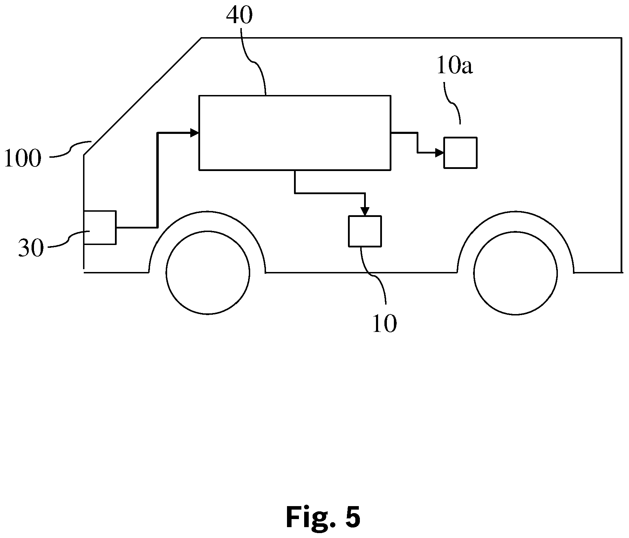

- Figure 5: the control system controlling an at least partially autonomous robot.

### Description of the embodiments

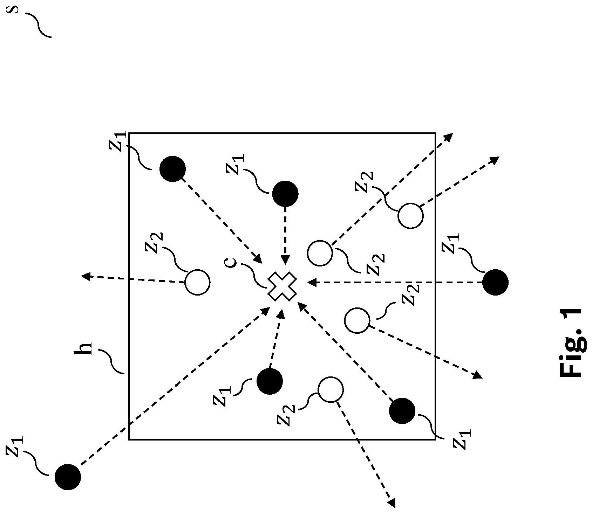

Figure 1 shows an embodiment of a hypervolume (h) in a latent space (s). In the embodiment, the hypervolume (h) is a hypercube, preferably located at an origin of the latent space (s). When running the training method as described above, the neural network determines first latent representations (*z*₁) and second latent representations (*z*₂). The first latent representations (*z*₁) correspond to sensor signals from a training dataset while the second latent representations (*z*₂) correspond to other sensor signals, i.e., sensor signals not in the training dataset.

During training, the first latent representations (*z*₁) are pushed towards a center (c) of the hypervolume, while the second latent representations (*z*₂) are being pushed away from the center.

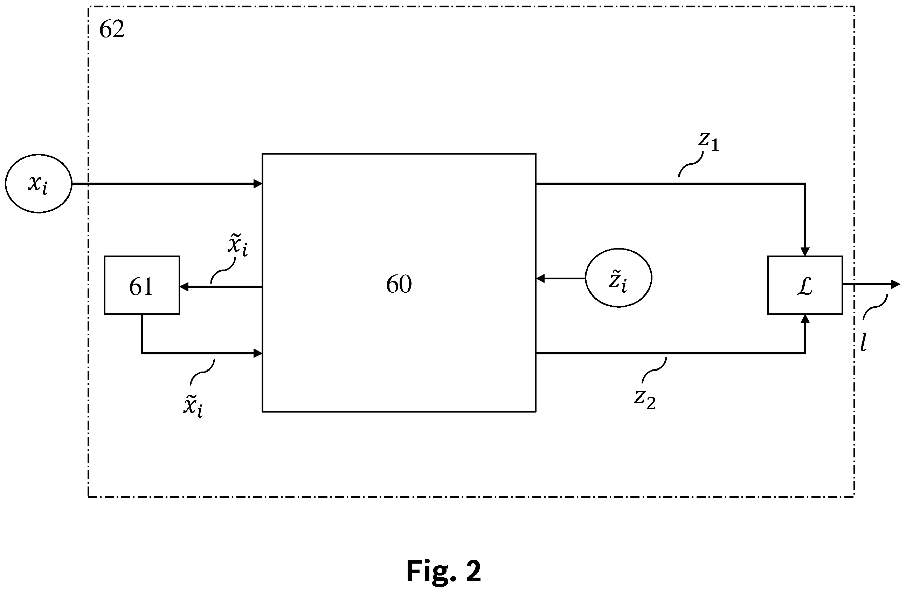

Figure 2 depicts a neural network (60) during training of the neural network (60). The neural network (60) is an invertible neural network, e.g., an invertible residual neural network.

The neural network (60) is provided a sensor signal (*xᵢ*) for which the neural network (60) determines a first latent representation (*z*₁) in a forward mapping operation.

A value (*z̃ᵢ*) from within the hypervolume (h) the latent space is determined. Preferably, the value (*z̃ᵢ*) is sampled at random. The value (*z̃ᵢ*) is then propagated through the neural network (60) in a backward mapping operation, resulting in a second sensor signal (*x̃ᵢ*). When using automatic differentiation methods (e.g., autodiff) for training the neural network (60), the resulting second sensor signal (*x̃ᵢ*) is preferably detached from the computational graph in a detaching operation (61). The resulting of detaching is the same second sensor signal (*x̃ᵢ*), however, the second sensor signal (*x̃ᵢ*) is detached from gradient computation and hence has no negative impact on the training method.

The second sensor signal (*x̃ᵢ*) is the propagated through the neural network (60) in a forward mapping operation in order to determine a second latent representation (*z*₂). The second latent representation (*z*₂) and the first latent representation (*z*₁) are then forwarded to a loss function ( 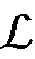 ) in order to determine a loss value (*l*). The loss function ( 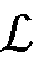 ) comprises a first term that characterizes a difference of the first latent representation (*z*₁) and the center (c) of the hypervolume (h) and a second term that characterizes a negative difference of the second latent representation (*z*₂) and the center (c).

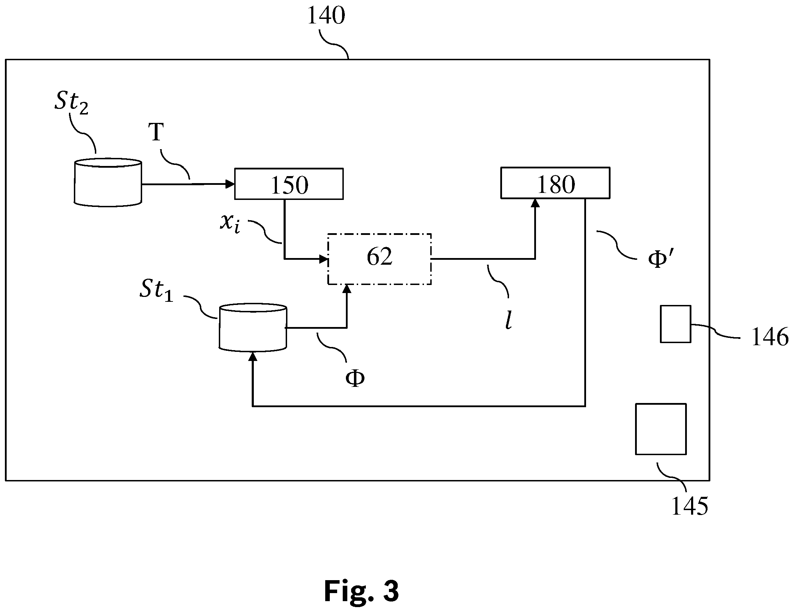

Figure 3 shows an embodiment of a training system (140) for training the neural network (60) of the control system (40) by means of a training data set (T). The training data set (T) comprises a plurality of sensor signals (*xᵢ*) which are used for training the neural network (60), wherein the training data set (T) further comprises, for each input signal (*xᵢ*), a desired output signal (*tᵢ*) which corresponds to the input signal (*xᵢ*) and characterizes a classification of the input signal (*xᵢ*).

For training, a training data unit (150) accesses a computer-implemented database (St₂), the database (St₂) providing the training data set (T). The training data unit (150) determines from the training data set (T) preferably randomly at least one sensor signal (*xᵢ*) and transmits the sensor signal (*xᵢ*) to the neural network (60). In a combined step (62), the neural network (60) determines a first latent representation (*z*₁) and a second latent representation (*z*₂) based on the sensor signal (*xᵢ*), wherein a loss value (*l*) is determined from the first latent representation (*z*₁) and second latent representation (*z*₂).

The loss value (*l*) transmitted to a modification unit (180).

The modification unit (180) determines new parameters (Φ') of the neural network (60) based on the loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively, or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

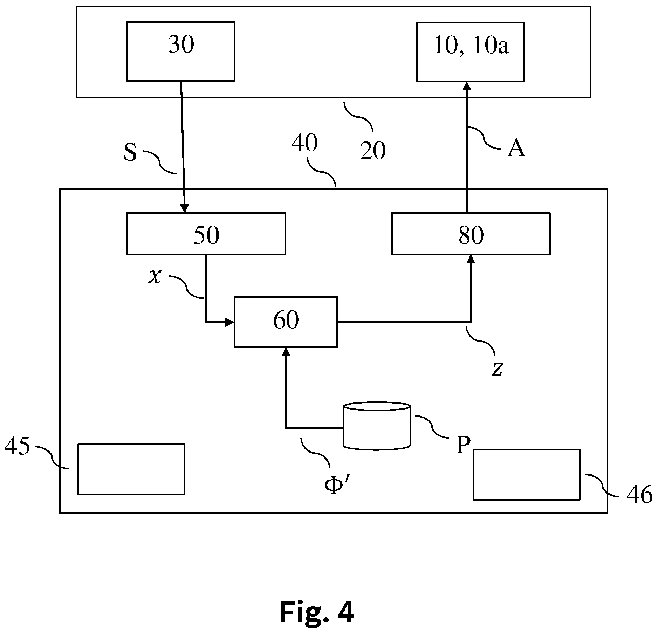

Figure 4 shows an embodiment of a control system (40) determining a control signal (A) for an actuator (10) or a display (10a) based on an output of the trained neural network (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (*x*). Alternatively, in case of no receiving unit (50), each sensor signal (S) may directly be taken as an input signal (*x*). The input signal (*x*) may, for example, be given as an excerpt from the sensor signal (S). Alternatively, the sensor signal (S) may be processed to yield the input signal (*x*). In other words, the input signal (*x*) is provided in accordance with the sensor signal (S).

The input signal (*x*) is then passed on to a neural network (60).

The neural network (60) is parametrized by parameters (Φ), which are stored in and provided by a parameter storage (*St*₁)*.*

The neural network (60) determines a latent representation (*z*) of the input signals (*x*). The latent representation (*z*) is transmitted to an optional conversion unit (80), which converts the latent representation (*z*) into the control signals (A). The control signals (A) are then transmitted to the actuator (10) for controlling the actuator (10) accordingly. Alternatively, the output signal (*y*) may directly be taken as control signal (A).

Specifically, if the latent representation (*z*) deviates further from the center (c) of the hypervolume (h) than a predefined threshold (e.g., the edge of the hypervolume), the sensor signal (*x*) is considered anomalous and the fact is displayed on the display (10a) and/or an operator is requested to take over control of the actuator (10).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (*x*) may hence be understood as an input image and the neural network (60) as an image classifier.

If the conversion unit (80) deems the sensor signal (S) to be anomalous, the at least partially automated robot may request manual control from a human driver or human operator.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the neural network (60) deems them most likely to be, e.g., pedestrians or trees, and the control signal (A) may be determined depending on the classification.

Alternatively or additionally, the control signal (A) may also be used to control the display (10a), e.g., for displaying the anomalous senso signal (S). It can also be imagined that the control signal (A) may control the display (10a) such that it produces a warning signal if the vehicle (100) in case an anomalous sensor signal (S) is detected and/or handover to a human is requested. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g., a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method for training a neural network (60), wherein the neural network (60) is an invertible neural network configured for accepting a sensor signal as input, wherein the method comprises the steps of:
• Obtaining a first sensor signal (*xᵢ*) from a training dataset (*T*);
• Sampling a value (*z̃ᵢ*) from a latent space (s) of the neural network (60), wherein the value (*z̃ᵢ*) is sampled from a predefined hypervolume (h) in the latent space (s);
• Determining a second sensor signal (*x̃ᵢ*) from the sampled value (*z̃ᵢ*) by inversely mapping the sampled value (*z̃ᵢ*) through the neural network (60);
• Determining a first latent representation (*z*₁) by forward mapping the first sensor (*xᵢ*) signal through the neural network (60);
• Determining a second latent representation (*z*₂) by forward mapping the second sensor signal (*x̃ᵢ*) through the neural network (60);
• Determining a loss value (*l*) from a loss function ( 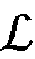 ), wherein the loss function ( 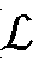 ) comprises a first term that characterizes a difference of the first latent representation (*z*₁) to a center (c) of the hypervolume (h) and wherein the loss function ( 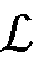 ) further comprises a second term that characterizes a negative difference of the second latent representation (*z*₂) to the center (c) of the hypervolume (h);
• Training the neural network (60) based on a negative gradient of the loss value (*l*).

2. Method according to claim 1, wherein the center (c) of hypervolume (h) is located at the origin of the latent space.

3. Method according to claim 1 or 2, wherein the negative gradient is determined based on an automatic differentiation method and wherein the second sensor signal (*x̃ᵢ*) is further detached from the computational graph of the automatic differentiation method before being forward mapped through the neural network (60).

4. Method according to any one of the preceding claims, wherein the hypervolume (h) is a hypersphere or a hypercube or a hyperrectangle.

5. Method according to any one of the preceding claims, wherein the first term and/or the second term is a Euclidean distance or a cosine similarity or function expressing a maximum of a dimension-wise distance or a sum of the fourth powers of a dimension-wise distance.

6. Computer-implemented method for determining whether a provided sensor signal is normal or anomalous:
• Obtaining a neural network trained according to anyone of the preceding claims;
• Determining a latent representation of the sensor signal by forward mapping the sensor signal through the neural network;
• Determining the sensor signal as normal if a distance of the latent representation to the center according to claim 1 is equal to or below a predefined threshold and determine the sensor signal as anomalous otherwise.

7. Method according to claim 4, wherein the threshold characterizes a border of the hypervolume of claim 1.

8. Method for determining a control signal (A) for a technical system (100, 200, 300, 400, 500), wherein a sensor signal (S) of a sensor (30) observing an environment of the machine and/or the machine itself is provided to a method according to claim 4 or 5, wherein the control signal (A) is determined according to the determination of the sensor signal (S) as anomalous or normal.

9. Training system (140), which is configured to carry out the training method according to any one of the claims 1 to 5.

10. Control system (40), which is configured to carry out the method according to claim 7, wherein the control signal (A) is configured to control an actuator (10) and/or a display (10a).

11. Computer program that is configured to cause a computer to carry out the method according to any one of the claims 1 to 8 with all of its steps if the computer program is carried out by a processor (45, 145).

12. Machine-readable storage medium (46, 146) on which the computer program according to claim 11 is stored.
